Europäisches Patentamt

**European Patent Office**

**Office européen des brevets**

(11) Numéro de publication: **0 060 749**
**B1**

(12) **FASCICULE DE BREVET EUROPEEN**

(45) Date de publication du fascicule du brevet:
16.01.85

(21) Numéro de dépôt: **82400330.5**

(22) Date de dépôt: **25.02.82**

(51) Int. Cl.⁴: **A 23 C 15/14,** A 23 C 19/14, C 11 B 1/12, A 23 J 1/20

(54) **Procédé de récupération de matière grasse et de matière sèche dans des fromages.**

(30) Priorité: **16.03.81 FR 8105553**

(43) Date de publication de la demande:
**22.09.82 Bulletin 82/38**

(45) Mention de la délivrance du brevet:
**16.01.85 Bulletin 85/3**

(84) Etats contractants désignés:
**AT BE CH DE GB IT LI LU NL SE**

(56) Documents cités:
**DE - C - 212 797**
**US - A - 1 485 698**

**CHEMICAL ABSTRACTS, 1955 colonne 529b**
**COLUMBUS, OHIO (US)**

(73) Titulaire: **BEUNET S.A., Le Breuil La Meilleraye de Bretagne, F-44520 Moisdon La Rivière (FR)**

(72) Inventeur: **Beunet, Joel, Ker Riaden Le Chatelier, F-35470 Pléchatel (FR)**

(74) Mandataire: **Le Guen, Louis François, 13, rue Emile Bara BP 91, F-35802 Dinard Cedex (FR)**

ACTORUM AG

## Description

La présente invention concerne un procédé de récupération de matière grasse et de matière sèche, contenant des protéines, dans les fromages.

Il arrive fréquemment que des fromages deviennent impropres à la consommation en tant que tels. Ainsi, les camemberts trop faits ne sont plus consommables. Ainsi, également, des erreurs peuvent se produire dans la fabrication de pâtes molles qui ne sont alors plus commercialisables. On pourrait encore citer d'autres exemples de fromages qui ne sont plus consommables.

Il faut savoir que, dans tous ces fromages devenus non consommables, la matière grasse demeure inaltérée. Au lieu de jeter les fromages, il y a donc un intérêt à tenter de la récupérer, car elle représente un élément essentiel de l'alimentation qu'il est dommage de laisser détruire.

Un objet de la présente invention consiste à prévoir un procédé permettant la récupération d'une grande partie de la matière grasse qui existe dans des fromages non consommables pour les raisons indiquées ci-dessus, soit qu'ils soient trop faits, soit qu'une erreur ait été commise dans leur fabrication, cette erreur n'ayant évidemment pas entraîné de modifications de la nature de la matière grasse. Par ailleurs, les parties sèches du fromage que l'on sépare de la matière grasse sont également utilisables pour y récupérer des protéines.

Suivant une caractéristique de l'invention, il est prévu de diluer le fromage à traiter dans de l'eau, puis de faire fondre le mélange obtenu, puis d'éliminer du liquide obtenu les parties sèches et, enfin, d'écrémer le liquide afin de séparer la matière grasse.

Suivant une autre caractéristique, on dilue le fromage à traiter dans de l'eau à raison de 100 kg de fromage environ pour 900 l d'eau environ.

Suivant une autre caractéristique, on fond le mélange eau/fromage dissous à 60° C environ.

Suivant une autre caractéristique, on élimine la matière sèche du mélange fondu en le traitant à chaud dans un clarificateur.

Les caractéristiques de l'invention mentionnées ci-dessus, ainsi que d'autres apparaîtront plus clairement à la lecture de la description suivante d'exemples de mise en œuvre du procédé.

On sait qu'un fromage fermenté, puis affiné, du genre du camembert, du roquefort, etc., contient 50% d'eau et 50% de matières solides, qui peuvent se décomposer en 27% de matière sèche, constituant une poudre riche en protéines, et 23% de matière grasse. Bien entendu, les chiffres mentionnés ci-dessus ne sont donnés qu'à titre d'exemple approximatif. Quand un tel fromage devient trop fait, ce sont les altérations de la matière sèche qui rendent le fromage impropre à la consommation. Par contre, la matière grasse et évidemment l'eau ne changent pas de nature.

Pour les pâtes molles dont la préparation a été contrariée par une erreur de cuisson, etc., il est bien évident que la matière grasse n'est pas non plus altérée.

Dans une série d'expériences, on a pris 100 kg de camemberts trop faits que l'on a mélangés, dans une cuve en fonte, avec 900 l d'eau. On a chauffé le mélange à 60° pendant 30 min et on a obtenu un mélange liquide gras. La cuve utilisée était une cuve que l'on emploie couramment pour fondre du beurre afin d'obtenir de l'huile de beurre.

On a passé ce liquide chaud dans un clarificateur du type des clarificateurs utilisés pour clarifier les moûts de brasserie par exemple. Le liquide sortant du clarificateur ne contient alors pratiquement plus de matières sèches.

On traite ensuite le liquide passé sortant du clarificateur dans une écrémeuse du type utilisé par exemple pour fabriquer du babeurre. On récupère ainsi environ 23 kg de matière grasse. En pratique, on a constaté que l'on pouvait ainsi débarrasser le liquide passé de toute la matière grasse qu'il contient jusqu'à environ 0,2‰.

On a utilisé la matière grasse récupérée comme matière grasse pour fabriquer des fromages à goût fort du genre roquefort, bleu et pont-l'évêque, et on a obtenu d'excellents résultats.

Dans une variante, après sa séparation, on a soumis la matière grasse récupérée à un traitement sous vide qui a permis d'éliminer les gaz occlus dans la masse grasse, dont on a ainsi réduit l'odeur forte.

Par ailleurs, les matières sèches récupérées peuvent encore être traitées pour y récupérer des protéines qui sont réutilisables, par exemple dans l'alimentation animale.

## Revendications

1. Procédé de récupération de matière grasse et de matière sèche dans les fromages, caractérisé en ce que l'on dilue le fromage à traiter dans de l'eau, puis on fait fondre le mélange obtenu, puis on élimine du liquide obtenu les parties sèches et, enfin, on écrème le liquide afin de séparer la matière grasse.

2. Procédé suivant la revendication 1, caractérisé en ce qu'on dilue le fromage à traiter dans de l'eau à raison de 100 kg de fromage environ pour 900 l d'eau environ.

3. Procédé suivant l'une des revendications 1 ou 2, caractérisé en ce qu'on fond le mélange eau/fromage dissous à 60° C environ.

4. Procédé suivant l'une des revendications 1 à 3, caractérisé en ce qu'on sépare la matière sèche en clarifiant le mélange fondu.

5. Procédé suivant l'une des revendications 1 à 4, caractérisé en ce qu'on traite la matière grasse écrémée sous vide.

## Patentansprüche

1. Verfahren zur Rückgewinnung von fettigem Material und trockenem Material aus Käsen, dadurch gekennzeichnet, dass der zu behandelnde Käse in Wasser verdünnt wird, dass dann die erhaltene Mischung geschmolzen wird, dass dann das trockene Material aus der erhaltenen Flüssigkeit abgeführt und schliesslich die Flüssigkeit zum Abtrennen des fettigen Materials abgeschöpft wird.

2. Verfahren nach Anspruch 1, dadurch gekennzeichnet, dass der zu behandelnde Käse in Wasser in einem Verhältnis von etwa 100 kg Käse zu etwa 900 l Wasser verdünnt wird.

3. Verfahren nach einem der Ansprüche 1 oder 2, dadurch gekennzeichnet, dass das verdünnte Wasser/Käse-Gemisch bei etwa 60°C geschmolzen wird.

4. Verfahren nach einem der Ansprüche 1 bis 3, dadurch gekennzeichnet, dass das trockene Material durch Abklären der geschmolzenen Mischung abgetrennt wird.

5. Verfahren nach einem der Ansprüche 1 bis 4, dadurch gekennzeichnet, dass das abgeschöpfte fettige Material unter Vakuum behandelt wird.

## Claims

1. A process for the recovery of fatty material and dry material in cheeses, characterized in that cheese to be treated is diluted into some water, then the obtained mixture is melted, then dry material is eliminated from the obtained liquid, and, finally, the liquid is skimmed for separating fatty material.

2. A process according to Claim 1, characterized in that cheese to be treated is diluted into some water with a ratio of about 100 kg of cheese to about 900 l of water.

3. A process according to Claim 1 or 2, characterized in that the diluted water/cheese mixture is melted at about 60°C.

4. A process according to one of Claims 1 to 3, characterized in that dry material is separated by clarifying the melted mixture.

5. A process according to one of Claims 1 to 4, characterized in that skimmed fatty material is treated under vacuum.